# EUROPÄISCHE PATENTSCHRIFT

(11) **EP 1 535 541 B1**
(45) Veröffentlichungstag und Bekanntmachung des Hinweises auf die Patenterteilung: **23.04.2008**
(21) Anmeldenummer: 04027626.3
(22) Anmeldetag: 20.11.2004
(51) Int. Cl.: A47C 23/00

(54) **Einzelfederelement**
Spring element
Elément de ressort

(30) Priorität: 25.11.2003 DE 20318336 U
(43) Veröffentlichungstag der Anmeldung: 01.06.2005
(73) Patentinhaber: Hartmann, Siegbert, 32584 Löhne (DE)
(72) Erfinder: Hartmann, Siegbert, 32584 Löhne (DE)
(74) Vertreter: Rolf, Gudrun

(56) Entgegenhaltungen:
- DE-U- 29 721 655
- FR-A- 2 790 929
- US-A- 5 588 165

## Beschreibung

Die Erfindung betrifft ein Einzelfederelement, insbesondere zur Auflagerung von Matratzen, mit einem zentralen Fußteil mit einer Befestigungsvorrichtung auf einem Unterteil, wobei das Fußteil sich radial seitlich nach oben erstreckende Federarme mit sich daran anschließenden Auflagerflächen aufweist und die Auflagerflächen unmittelbar an den Federarmen und von den anderen Auflagerflächen unabhängig an den Federarmen angeordnet und die Auflagerflächen bei einer senkrechten Belastung des Einzelfederelementes von oben radial nach außen unten auswandernd ausgebildet sind, sodass in Abhängigkeit von der Stärke der Belastung unterschiedliche Flächen einer zu lagernden Auflage, wie der einer Matratze, unterstützt sind.

Es ist ein Polsterelement als Polsterunterlage von Sitz- oder Liegeflächen bekannt, DE 297 21 655 U1, welches Federarme und Auflagerflächen aufweist die so elastisch gekoppelte sind, dass bei einer Belastung des Polsterelementes in senkrechter Richtung von oben keine seitliche Ausweichbewegung der Auflagerflächen erfolgen kann und diese stets an der gleichen Stelle unterhalb einer Matratze verbleiben.

Nachteilig an dieser vorbekannten Ausführungsform ist insbesondere, dass die Auflagerflächen stets dieselbe Fläche einer Matratze unterstützten, sodass an diesen Stellen keine Lüftung stattfinden kann.

Weiterhin ist ein Federelement für Sitz- oder Liegemöbel bekannt, FR 2 790 929 A1, welches voneinander unabhängige Federarme mit Auflagerflächen aufweist, die bei einer senkrechten Belastung des Einzelfederelementes radial nach außen und leicht nach unten auswandern können, wobei diese Auflagerflächen jedoch schon nach einem sehr kurzen Federweg vom Rand der Auflagerflächen zu im belasteten Zustand weiter innen liegenden Stützflächen wechseln.

Aufgabe der Erfindung ist es, ein Einzelfederelement zur Verfügung zu stellen, welches eine optimierte Lüftung und Unterfederung einer Auflage ermöglicht.

Die Lösung dieser Aufgabe wird in vorteilhafter Art und Weise dadurch gelöst, dass das Einzelfederelement mit einem Zusatzfederelement versehen, welches ebenfalls einen zentralen Fußteil aufweist, welcher an dem ersten Fußteil festlegbar ist und der ebenfalls davon radial seitlich nach oben erstreckende Federarme mit sich daran anschließenden Auflagerflächen aufweist, wobei das Maß der Länge und/ oder des Anstellwinkels der Federarme so gewählt ist, dass die Auflagerflächen des Zusatzfederelementes tiefer angeordnet sind als die Auflagerflächen des Einzelfederelementes. Durch ein solches Zusatzfederelement vergrößert sich die Fläche der ständig belüfteten Auflageunterseite sehr wesentlich, da die im unbelasteten oder nur leicht beanspruchten Zustand einer Matratze unterstützte Fläche sehr klein gehalten werden kann. Des Weiteren kann eine Progression der Federkennlinie erzeugt bzw. Einfluss auf den möglichen Federweg genommen werden, sodass durch die Kombination unterschiedlich ausgebildeter Einzelfederelemente gleichzeitig eine optimal an den Körperbau eines Menschen angepasste Matratzenunterfederung zur Verfügung gestellt werden kann.

Weitere vorteilhafte Ausgestaltungen des Gegenstandes der Erfindung ergeben sich mit und in Kombination aus den nachfolgenden Unteransprüchen, wobei der Umfang der Erfindung durch die Ansprüche bestimmt wird.

Gemäß einer zu bevorzugenden Ausführungsform der Erfindung sind die Auflagerflächen nach oben ballig ausgebildet, um der Relativbewegung zwischen den Auflagerflächen und der Unterseite einer Matratze keinen Widerstand entgegen zu setzen.

Um zu gewährleisten, dass die gesamte, im unbelasteten Zustand einer Matratze unterstützte Fläche im belasteten Zustand gelüftet werden kann, ist es weiterhin von Vorteil Ausnehmungen in die Auflagerflächen des Einzelfederelements einzubringen und die noch vorhandenen nach oben gerichteten Oberflächen ebenfalls ballig auszuführen. Dadurch vergrößert sich die Fläche der ständig belüfteten Auflageunterseite wie auch die Fläche der nur zeitweise belüfteten Auflageunterseite sehr wesentlich.

Das Unterteil des Einzelfederelementes weist bevorzugt ein Befestigungselement zur Befestigung an oder auf einer Fläche oder auf einer Latte eines Lattenrostes auf, wobei jedoch auch zwischen Einzelfederelement und Unterteil weitere Zwischenelemente eingesetzt werden können, die ihrerseits dann mit korrespondierenden Befestigungsvorrichtungen ausgestattet sind. Solche Zwischenelemente können Zwischenfederelemente sein oder auch einfache Distanzblöcke, wodurch sich die Variabilität des Einzelfederelementes weiter drastisch erweitert, da wahlweise ein oder mehrere Zwischenelemente eingesetzt werden können und zusätzlich, bei als Zwischenfederelementen ausgeführten Zwischenelementen, Härtestopfen zur Beeinflussung der Federkennlinie eines jeden einzelnen Zwischenfederelementes in deren freie Zwischenräume eingesetzt werden können, sodass eine Vielzahl von unterschiedlichsten Federkennlinien und Federwegen in Abhängigkeit von persönlichen Vorzügen oder orthopädischen Gesichtspunkten zur Verfügung gestellt werden.

Ein weiterer Vorteil des erfinderischen Einzelfederelementes besteht darin, dass für alle oder einzelne Bauteile unterschiedliche Materialien oder Materialien unterschiedlicher Shore-Härten verwandt werden können, um eine Auflage möglichst optimal zu lagern.
Nachfolgend ist ein Ausführungsbeispiel der Erfindung anhand der Zeichnungen näher beschrieben. Es zeigen:
- Fig. 1: eine 3-D-Darstellung eines Einzelfederelementes mit Zusatzfederelement auf einer Latte eines Lattenrostes,
- Fig. 2: ein Einzelfederelement mit einem Zusatzfederelement und einem Zwischenfederelement auf einer Latte in Seitenansicht und
- Fig. 3: eine 3-D-Explosionsdarstellung des Gegenstandes der Fig. 2.

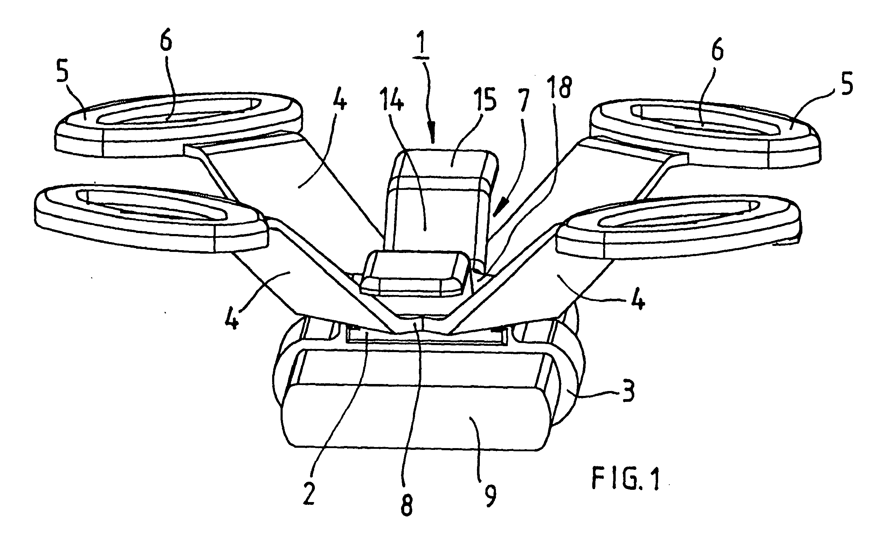

Das Einzelfederelement 1, wie es in Fig. 1 dargestellt ist, besteht aus einem Fußteil 8, von dem sich vier Federarme 4 radial seitlich nach oben erstrecken, an deren oberen Enden Auflagerflächen 5 mit inneren Ausnehmungen 6 angeordnet sind, die bei einer senkrechten Belastung von oben und einer elastischen Verformung der Federarme 4 radial nach außen und unten ausweichen, sodass bei unterschiedlichen Belastungszuständen der Auflage, beispielsweise einer Matratze, unterschiedliche Flächen unterstützt werden und zu unterschiedlichen Belastungszeitpunkten jeweils andere Flächen einer Matratze belüftet werden.

Oberhalb des zentralen Fußteils 8 ist ein Zusatzfederelement 7 angeordnet, welches ebenfalls ein Fußteil 18 aufweist, mit dem es auf dem Fußteil 8 des Einzelfederelementes 1 festgelegt ist. Das Zusatzfederelement 7 weist ebenfalls Federarme 14 auf, die sich radial seitlich nach oben erstrecken und daran angeformte Auflagerflächen 15 besitzen, wobei sich diese nicht bis in die Höhe der ersten Auflagerflächen 5 erstrecken, sodass erst nach einer entsprechenden Verformung der Federarme 4 die Auflagerflächen 15 unter einer zu lagernden Fläche einer Auflage, etwa einer Matratze, zur Anlage kommen.

Einzelfederelement 1;11 und Zusatzfederelement 7 können dabei aus identischen oder unterschiedlichen Materialien gefertigt sein und auch unterschiedliche Shore-Härten aufweisen, sodass sich beliebige Federkennlinien erzeugen und wahlfreie Federwege verwirklichen lassen. Das Einzelfederelement 1 gem. Fig. 1 ist auf einem Unterteil 3 angeordnet, welches auf einer Latte 9 eines Lattenrostes festgelegt ist. Das Unterteil 3 kann auch wie zeichnerisch nicht dargestellt auf einer Platte oder ähnlichem mit oder ohne Zapfen befestigt werden.

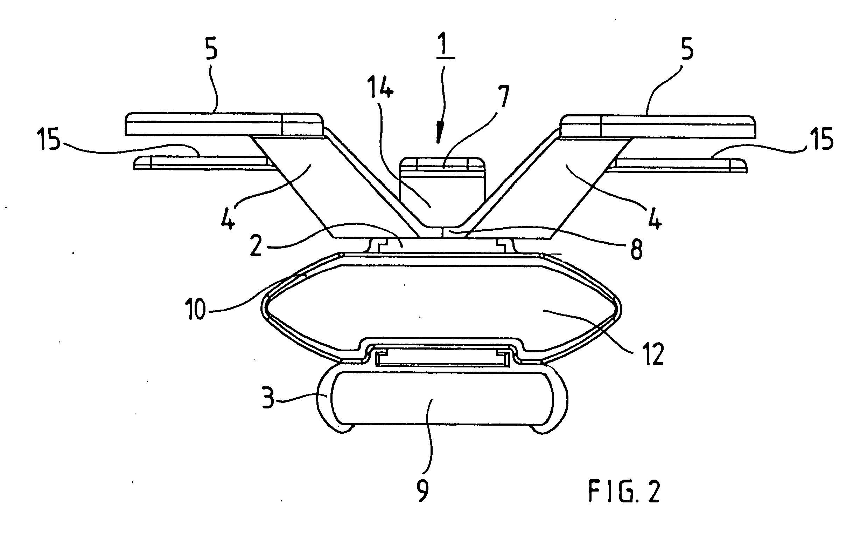

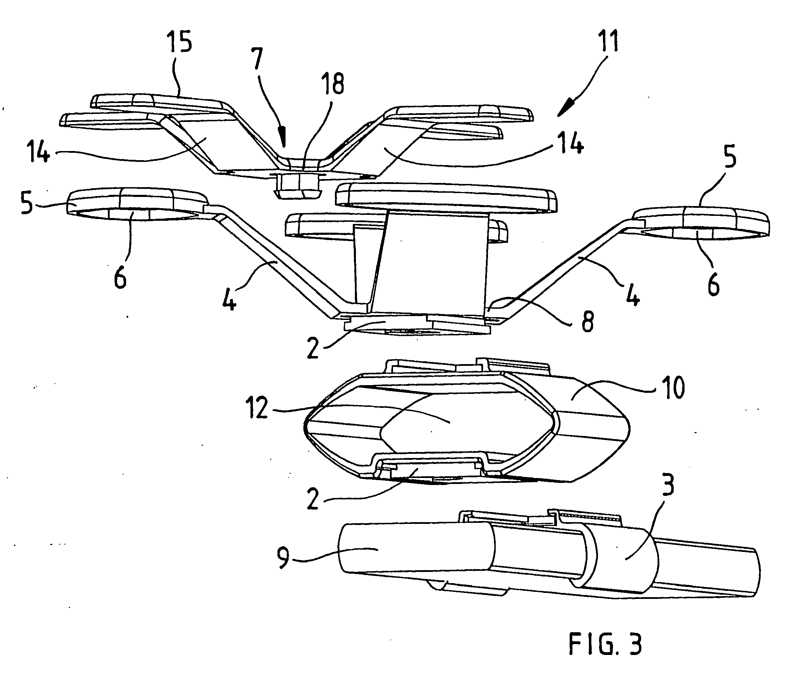

Wie in den Fig. 2 und 3 dargestellt, ist zwischen dem Einzelfederelement 1;11 und dem Unterteil 3 ein Zwischenelement 10 eingefügt, welches als Zwischenfederelement ausgebildet ist, wobei dieses auch als massiver Distanzblock ausgeführt sein könnte oder aber als Zusatzfederelement mit einem zeichnerisch nicht dargestellten Härtestopfen in seinem Zwischenraum 12 ausgestattet sein kann, was ebenfalls zeichnerisch nicht dargestellt ist, ebenso wie mehrere Zwischenelemente 10, die übereinander angeordnet sein können, um die Federeigenschaften weiter wunschgemäß oder anforderungsgemäß zu beeinflussen.

## Patentansprüche

1. Einzelfederelement (1,11); insbesondere für Auflagen wie Matratzen, mit einem zentralen Fußteil (8) mit einer Befestigungsvorrichtung auf einem Unterteil (3), wobei das Fußteil (8) sich radial seitlich nach oben erstreckende Federarme (4,14) mit sich daran anschließenden Auflagerflächen (5,15) aufweist, die unmittelbar an den Federarmen (4,14) und von benachbarten Auflagerflächen (5,15) unabhängig daran angeordnet sind, die bei einer senkrechten Belastung des Einzelfederelementes (1,11) von oben radial nach außen unten auswandernd ausgebildet sind und wobei in Abhängigkeit der Stärke der Belastung unterschiedliche Flächen einer zu lagernden Auflage unterstützt sind, **dadurch gekennzeichnet, dass** es ein Zusatzfederelement (7) mit einem zentralen Fußteil (18) aufweist, das an dem ersten Fußteil (8) festlegbar ist und das sich radial seitlich nach oben erstreckende Federarme (14) mit daran angeformten Auflagerflächen (15) besitzt, wobei das Maß der Länge und/ oder des Anstellwinkels der Federarme (14) so gewählt ist, dass die Auflagerflächen (15) des Zusatzfederelements (7) im unbelasteten Zustand der Auflage tiefer angeordnet sind als die Auflagerflächen (5) des Einzelfederelementes.

2. Einzelfederelement (1,11) nach Anspruch 1, **dadurch gekennzeichnet, dass** die Auflagerflächen (5/15) nach oben ballig ausgebildet sind.

3. Einzelfederelement (1/11) nach Anspruch 1, **dadurch gekennzeichnet, dass** die Auflagerflächen (5,15) Ausnehmungen (6) aufweisen und die nach oben gerichteten Oberflächen ballig ausgebildet sind.

4. Einzelfederelement (1,11) nach Anspruch 3 **dadurch gekennzeichnet, dass** die Ausnehmungen (6) so in die Auflagerflächen (5) eingebracht sind, dass sie im unbelasteten Zustand eines Einzelfederelements (1,11) eine andere Fläche einer Matratze unterstützen als in einem belasteten Zustand der Matratze, in dem die Federarme (4,14) radial nach außen unten ausgewandert sind.

5. Einzelfederelement (1,11) nach einem der vorgenannten Ansprüche, **dadurch gekennzeichnet, dass** das Unterteil (3) ein Befestigungselement zur Befestigung eines Einzelfederelementes (1) auf oder an einer Fläche oder auf einer Latte (9) eines Lattenrostes aufweist.

6. Einzelfederelement (1,11) nach einem der vorgenannten Ansprüche, **dadurch gekennzeichnet, dass** die Befestigungsvorrichtung des Fußteils (8) korrespondierend zu einer oberen Aufnahme eines Zwischenelements (10) ausgebildet ist, welches seinerseits eine untere Befestigungsvorrichtung zur Befestigung auf einem Unterteil (3) oder einem weiteren Zwischenelement (10) aufweist.

7. Einzelfederelement (1,11) nach Anspruch 7, **dadurch gekennzeichnet, dass** ein Zwischenelement (10) als Zwischenfederelement oder als Distanzblock ausgebildet ist.

8. Einzelfederelement (1,11) nach Anspruch 7, **dadurch gekennzeichnet, dass** ein oder mehrere Zwischenelemente (10) übereinander angeordnet sind.

9. Einzelfederelement (1,11) nach Anspruch 8, **dadurch gekennzeichnet, dass** ein Zwischenfederelement (10) einen freien Zwischenraum (12) aufweist, in den ein Härtestopfen zur Veränderung der Federkennlinie einsetzbar ist.

## Claims

1. Underspringing arrangement with integrated hardness adjustment, made of individual spring elements and/or elastic end-point bearings for resilient slats of slatted bed bases, having a bottom part (2;32) for fastening on a frame part (10), having a top part (3;33) with a bearing surface for a mattress, and having a spring element which is arranged therebetween and is made of elastic curved elements, rod elements or block elements, **characterized in that** top ends of sub-elements (9; 39) of the main spring element (4;34), which extend upwards from bottom, outer bolt holders (14) to an upwardly directed central opening, are designed such that, in the case of the underspringing arrangement (1;31) being subjected to the action of force in the vertical direction, they can yield not just in a vertical direction, but likewise in a horizontal direction, or in a direction which is a few degrees off the horizontal, along a horizontal reaction path (5) in the direction of the centre of the opening, and **in that** the underspringing arrangement (1;31) has a locking body (6;36) which extends into the opening and by means of which the horizontal reaction path (5), in a locking position, is partly or completely blocked, and **in that** the sub-elements (9;39), at their top ends, are spaced apart opposite one another and have functional surfaces (7) which are designed such that, in the case of being subjected to the action of force in the vertical direction and in an unlocking position of the locking body (6;36), they can be moved horizontally towards one another and which end up in direct or indirect abutment against one another, indirect abutment taking place along a narrow-side region of the locking body (6).

2. Underspringing arrangement according to Claim 1, **characterized in that** the sub-elements (9;39) are connected to one another by a connecting lug (11;41).

3. Underspringing arrangement according to one of the preceding claims, **characterized in that** the locking body (6;36) is designed as a kind of rotary slide and to be flat in a vertical plane and broad in a plane at right angles thereto, and its width corresponds, at most, to the distance between the two functional surfaces (7;37) in the non-loaded state of the underspringing arrangement (1;31).

4. Underspringing arrangement according to one of the preceding claims, **characterized in that** the locking body (6;36) is mounted in the top part (3;33).

5. Underspringing arrangement according to one of the preceding claims, **characterized in that**, in the region above the functional surfaces (7;37), the sub-elements (9;39) are supported vertically beneath the top part (3;33) of the underspringing arrangement (1;31) and are designed such that they can be moved horizontally beneath the supporting means.

6. Underspringing arrangement according to one of the preceding claims, **characterized in that** the locking body (6;36) itself is of elastically deformable or rigid design.

7. Underspringing arrangement according to one of the preceding claims, **characterized in that** it is designed as an end-point bearing for resilient slats of slatted bed bases, with a top part (3;33) with accommodating pockets (19) for the ends of the resilient slats, and the top part (3;33) has two, three or more accommodating pockets (19).

8. Underspringing arrangement according Claim 7, **characterized in that** the adjusting element (43) of the hardness adjuster (48) of an end-point bearing with three accommodating pockets (19) is set back behind the end of a central accommodating pocket (19) and behind the top contour of the top part (33) of the end-point bearing (31).

9. End-point bearing according to one of the preceding claims, **characterized in that** the surface of the top part (3;33) of the mattress-bearing means has an access opening (21) for the adjusting element (13;43).

## Revendications

1. Support de lattes avec réglage de rigidité intégré, constitué d'éléments de ressort individuels et/ou de supports ponctuels élastiques pour des lattes de sommiers à lattes, comprenant une partie inférieure (2;32) pour la fixation sur une partie de cadre (10), une partie supérieure (3;33) avec une surface d'appui pour un matelas et un élément de ressort disposé entre elles, constitué d'éléments élastiques en forme de cintre, de barre ou de bloc, **caractérisé en ce que** des extrémités supérieures d'éléments partiels (9;39) de l'élément de ressort principal (4;34), s'étendant vers le haut depuis des logements de goujons extérieurs inférieurs (14) jusqu'à une ouverture centrale orientée vers le haut, sont réalisées de manière à pouvoir s'écarter sous l'effet de l'application d'une force verticale sur le support de lattes (1;31), non seulement dans une direction verticale, mais aussi dans une direction horizontale ou s'en écartant de quelques degrés angulaires, et **en ce que** le support de lattes (1;31) présente un corps de verrouillage (6;36), qui s'étend dans l'ouverture et par le biais duquel la course de réaction horizontale (5) est partiellement ou complètement bloquée dans une position de verrouillage, et **en ce que** les éléments partiels (9;39) sont opposés et espacés à leurs extrémités supérieures et présentent des faces fonctionnelles (7) qui, lors de l'application d'une force verticale, et lorsque le corps de verrouillage (6;36) est dans une position de déverrouillage, sont réalisées de manière à pouvoir se déplacer horizontalement l'une vers l'autre, et à venir en appui l'une contre l'autre directement ou indirectement, et dans le cas d'une application indirecte, celle-ci s'effectue contre une région de petit côté du corps de verrouillage (6).

2. Support de lattes selon la revendication 1, **caractérisé en ce que** les éléments partiels (9;39) sont connectés les uns aux autres par une patte de connexion (11;41).

3. Support de lattes selon l'une quelconque des revendications précédentes, **caractérisé en ce que** le corps de verrouillage (6;36) est réalisé sous forme de tiroir rotatif et est réalisé sous forme plate dans un plan vertical et sous forme large dans un plan perpendiculaire à celui-ci, et la dimension de sa largeur correspond au maximum à la dimension de la distance entre les deux faces fonctionnelles (7;37) dans l'état non sollicité du support de lattes (1;31).

4. Support de lattes selon l'une quelconque des revendications précédentes, **caractérisé en ce que** le corps de verrouillage (6;36) est monté dans la partie supérieure (3;33).

5. Support de lattes selon l'une quelconque des revendications précédentes, **caractérisé en ce que** dans la région au-dessus des faces fonctionnelles (7;37), les éléments partiels (9;39) sont soutenus dans la direction verticale sous la partie supérieure (3;33) du support de lattes (1;31) et sont réalisés de manière déplaçable dans la direction horizontale sous ce soutien.

6. Support de lattes selon l'une quelconque des revendications précédentes, **caractérisé en ce que** le corps de verrouillage (6;36) est réalisé lui-même de manière rigide ou élastiquement déformable.

7. Support de lattes selon l'une quelconque des revendications précédentes, **caractérisé en ce qu'**il est réalisé sous forme de support ponctuel pour des lattes de sommiers à lattes avec une partie supérieure (3;33) avec des cavités de réception (19) pour les extrémités des lattes, et la partie supérieure (3;33) présente deux ou trois cavités de réception (19) ou davantage.

8. Support de lattes selon la revendication 7, **caractérisé en ce que** l'élément de réglage (43) du dispositif de réglage de rigidité (48) d'un support ponctuel avec trois cavités de réception (19) est disposé en retrait derrière l'extrémité d'une cavité de réception centrale (19) et derrière le contour supérieur de la partie supérieure (33) du support ponctuel (31).

9. Support ponctuel selon l'une quelconque des revendications précédentes, la surface de la partie supérieure (3;33) du support de matelas présente une ouverture d'accès (21) à l'élément de réglage (13;43).
